# EUROPÄISCHE PATENTSCHRIFT

(11) **EP 1 174 220 B1**
(45) Veröffentlichungstag und Bekanntmachung des Hinweises auf die Patenterteilung: **07.07.2010**
(21) Anmeldenummer: 01110968.3
(22) Anmeldetag: 07.05.2001
(51) Int. Cl.: B25B 5/06, B25B 5/14, B29C 65/78

(54) **Spannelement**
Clamping device
Moyen de serrage

(30) Priorität: 17.07.2000 DE 10035093
(43) Veröffentlichungstag der Anmeldung: 23.01.2002
(73) Patentinhaber: Georg Fischer Rohrleitungssysteme AG, 8201 Schaffhausen (CH)
(72) Erfinder: Bayer, Marcus, 8200 Schaffhausen (CH); Wermelinger, Jörg, 8200 Schaffhausen (CH)
(74) Vertreter: Weiss, Wolfgang

(56) Entgegenhaltungen:
- EP-A- 0 453 903
- EP-A- 0 852 996
- DE-A- 4 121 380
- GB-A- 2 284 775
- US-A- 5 919 335

## Beschreibung

Die Erfindung bezieht sich auf ein Spannelement zum Einspannen von Kunststoffformteilen während des Schweissens, umfassend ein flanschartiges Befestigungsteil zur Befestigung an einer Kunststoffschweissvorrichtung, wobei das Spannelement auf einer Innenfläche, die der Aussenfläche des Kunststoffformteils gegenüberliegend angeordnet ist, mindestens einen Vorsprung aufweist, und wobei das Befestigungsteil mindestens eine erste ringförmige Aussparung zur Aufnahme des Spannelementes aufweist.

Im Rohrleitungsbau werden zunehmend Kunststoffformteile, wie beispielsweise Rohrbögen und Rohrverzweigungen, eingesetzt, die auf der Baustelle miteinander verschweisst werden. Die Kunststoffrohrformteile werden in einer speziellen Schweissvorrichtung axial zueinander ausgerichtet, eingespannt und rechtwinklig und plan bearbeitet. Die Rohrenden werden aufgeheizt und axial zusammengepresst. Während des Schweissvorganges werden die Kunststoffrohrformteile von Spannsystemen an die Schweissvorrichtung festgehalten.

Aus der EP-B-453903 ist eine Einrichtung zum stirnseitigen Verschweissen von Kunststoffteilen bekannt, die unter anderem zwei gattungsbildenden Spannvorrichtungen offenbart. Eine Spannvorrichtung ist fest und die zweite Spannvorrichtung ist axial verschiebbar in der Schweisseinrichtung angeordnet. Die Spannvorrichtungen sind als halbkreisförmige Bauteile dargestellt, die in axialer Richtung eine im Vergleich mit dem Rohrdurchmesser relativ grosse Breite aufweisen. Die grosse Breite ist notwendig um die Spannkraft gleichmässig auf dem Umfang der miteinander zu verschweissenden Rohrformteile zu verteilen und so die Rohre während des Schweissvorganges gut in der gewünschten Lage zu halten. Es wird nicht beschrieben, wie die Spannkraft erzeugt wird. Um auch bei engen Platzverhältnissen und bei immer kleiner werdenden Armaturen und Rohrformteilen eine gute Einspannung zu ermöglichen, sind neue Einspannvorrichtungen gewünscht.

Aus der EP 852996 A2 ist eine weitere Stumpfschweissmaschine bekannt, die angepasst ist zum Schweissen von speziellen Kunststoffformteilen, wobei die Achsen der Formteile unter einem Winkel zueinander angeordnet sind. In einem unteren Klemmbereich, der mit dem Rahmen der Maschine verbunden ist, werden halbkreisförmige Spannelemente aufgenommen. Der untere Klemmbereich weist hierzu Aussparungen auf.

Ausgehend von diesem Stand der Technik ist es Aufgabe der Erfindung, ein Spannelement zum Einspannen von Kunststoffformteilen während des Schweissens anzugeben, wobei eine möglichst sichere und möglichst platzsparende Einspannung erreicht wird.

Diese Aufgabe wird gelöst durch ein Spannelement zum Einspannen von Kunststoffformteilen während des Schweissens, umfassend ein flanschartiges Befestigungsteil zur Befestigung an einer Kunststoffschweissvorrichtung, wobei das Spannelement auf einer Innenfläche, die der Aussenfläche des Kunststoffformteils gegenüberliegend angeordnet ist, mindestens einen Vorsprung aufweist, wobei das Befestigungsteil mindestens eine erste ringförmige Aussparung zur Aufnahme des Spannelementes aufweist, und wobei das Befestigungsteil mindestens eine zweite Aussparung zur Aufnahme von radial auf das Spannelement einwirkenden Federelementen aufweist.

Bevorzugte Weiterbildungen der Erfindung ergeben sich aus den abhängigen Ansprüchen.

Es ist von Vorteil, dass das Kunststoffrohrformteil während des Schweissens sicher und möglichst ohne Beschädigung in die Schweissvorrichtung festgehalten wird. Dies wird dadurch erreicht, dass die Innenfläche des ringförmigen Spannelementes ringförmig und segmental angeordnet ist, derart, dass der Vorsprung das Kunststoffformteil während dem Schweissvorgang mit gleichmässig verteilter Spannkraft umschliesst. Dies wird auch dadurch erreicht, dass der Vorsprung Seitenflächen und eine Spannfläche aufweist, wobei die Spannfläche konzentrisch und segmental verlaufend zur ringförmigen Innenfläche angeordnet ist.

Es ist auch von Vorteil, dass das Kunststoffrohrformteil während des Schweissens am Kriechen aus der Schweissvorrichtung gehindert wird. Dies wird dadurch erreicht, dass die Vorsprünge parallel zueinander verlaufend angeordnet sind. Dies wird auch dadurch erreicht, dass die Vorsprünge in axialer Richtung der zu verschweissenden Kunststoffteile beabstandet hintereinander angeordnet sind.

Es ist auch von Vorteil, dass der Einspannvorgang am Kunststoffrohrformteil möglichst wenig sichtbare Spuren hinterlässt. Dies wird dadurch erreicht, dass die Vorsprünge eine Höhe von 0,1 bis 0,3 mm über der Innenfläche des Spannelementes aufweisen.

Es ist weiter von Vorteil, dass während des Schweissens eine möglichst hohe Spannkraft auf die Kunststoffrohrformteile wirkt. Dies wird dadurch erreicht, dass die Spannfläche rechtwinklig zu den Seitenflächen und scharfkantig angrenzend an den Seitenflächen des Vorsprungs angeordnet sind. Dies wird auch dadurch erreicht, dass die Spannfläche des Vorsprungs eine Breite B von weniger als 20 % der Breite der Innenfläche des Spannelementes aufweist.

Es ist weiter von Vorteil, dass auch verhältnismässig kurze Rohrformteile zuverlässig mit einander verschweisst werden können. Dies wird dadurch erreicht, dass die Spannelemente in einem Abstand von weniger als 25 mm von der Schweissstelle der zu verschweissenden Kunststoffformteile angeordnet sind.

Es ist auch von Vorteil, dass die Kunststoffrohrformteile einfach in die Schweissvorrichtung eingebracht werden können und dass die Schweissvorrichtung einfach zusammengesetzt und bedient werden kann. Dies wird dadurch erreicht, dass in der Kunststoffschweissvorrichtung zu jedem der miteinander zu verschweissenden Kunststoffteile jeweils zwei Befestigungsteile und zwei Spannelemente als halbkreisförmigen und zueinander passenden Werkstücke auf gegenüberliegenden Seiten der Schweissstelle angeordnet sind.

Ein Ausführungsbeispiel der Erfindung wird anhand der Figuren beschrieben. Es zeigen:
Figur 1 eine Sicht auf ein erfindungsgemässes Spannelement,
Figur 2 eine Sicht auf ein flanschartiges Befestigungsteil zur Aufnahme des Spannelementes aus Figur 1,
Figur 3 einen etwas vergrösserten Schnitt durch das Spannelement von Figur 1,
Figur 4 eine weitere Vergrösserung aus einem Teilbereich des Spannelementes von Figur 3 und
Figur 5 ein zweites Ausführungsbeispiel des Spannelementes von Figur 4.

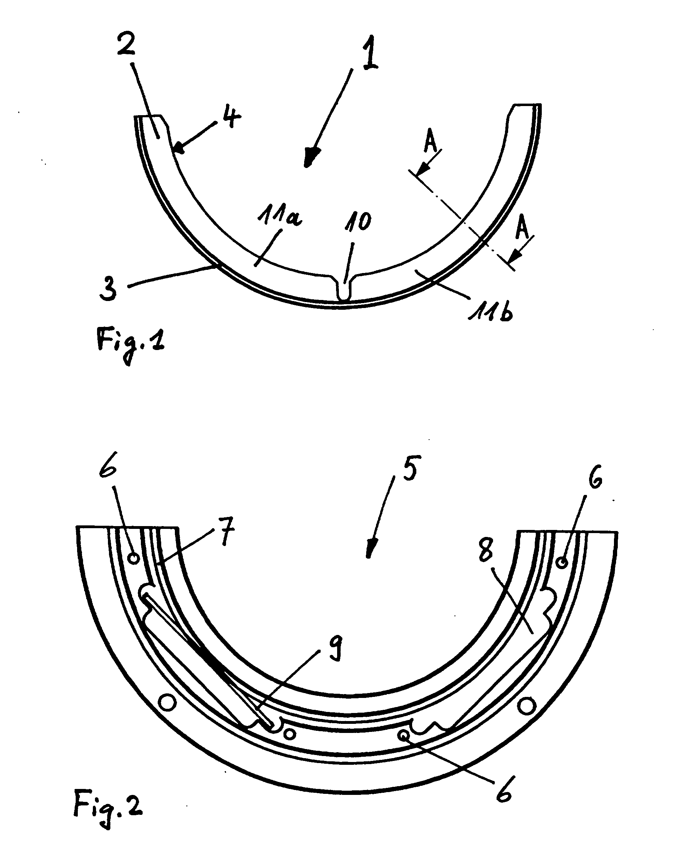

In Figur 1 ist ein Spannelement 1 zum Einspannen von Kunststoffrohrformteilen in einer Kunststoffschweissvorrichtung während des Schweissens dargestellt. Das Spannelement 1 ist ein ringförmiges Teil. Zwei identische Teile umschliessen jeweils ein zu verschweissendes Kunststoffrohrformteil, das hier nicht näher beschrieben wird. Als Kunststoffrohrformteile können beispielsweise Rohrleitungsenden, Rohrleitungsanschlussbereiche von Armaturen, Ventilen, Rohrleitungsverzweigungen oder Bögen miteinander verschweisst werden. Auf jeder Seite der Schweissstelle sind jeweils mindestens zwei Spannelemente 1 erforderlich um die Kunststoffrohrformteile einzuspannen. Die Spannelemente 1 sind derart ausgebildet, das sie das Kunststoffrohrformteil halbkreisförmig umschliessen. Bei sehr grossen Rohrleitungsdurchmessern können die Spannelemente 1 auch in Form von Kreissegmenten ausgebildet sein.

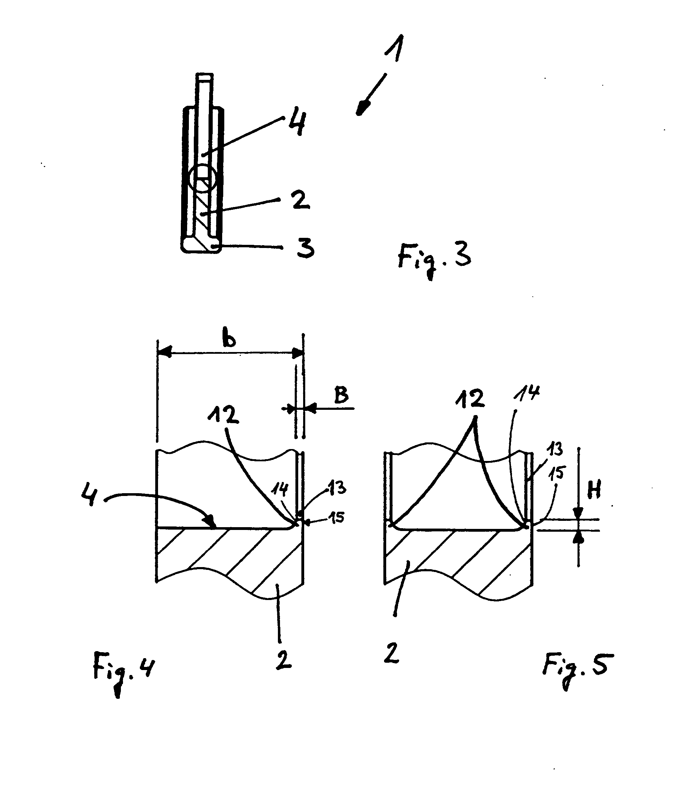

Das Spannelement 1 ist im Wesentlichen eine ringförmige Scheibe 2 mit einem im wesentlichen T-förmigen Profil. Auf der Aussenseite wird die Scheibe 2 begrenzt von einem umlaufenden Rand 3, der wesentlich dicker ist als der Rest der ringförmigen Scheibe 2. Auf der Innenseite der ringförmige Scheibe 2 wird das Spannelement 1 begrenzt von einer Innenfläche 4. Eine Linie AA durch das Spannelement 1 bezeichnet eine Schnittfläche, die in den Figuren 3, 4 und 5 dargestellt und beschrieben ist.

In Figur 2 ist ein flanschartiges Befestigungsteil 5 dargestellt. Das flanschartige Befestigungssteil 5 von Figur 2 weist vier identische Bohrungen 6 auf, durch die Schrauben oder andere Befestigungsmittel eingebracht werden können. Durch die Schrauben kann das Befestigungsteil 5 an die Kunststoffschweissvorrichtung, oder genauer gesagt an die Spannvorrichtung in der Schweissvorrichtung, befestigt werden. Im Befestigungsteil 5 ist eine ringförmige Aussparung 7 ausgebildet, in die der Rand 3 des Spannelementes 1 von Figur 1 aufgenommen werden kann. Wenn das Spannelement 1 im Befestigungsteil 5 aufgenommen ist, wird das Befestigungsteil 5 praktisch das gesamte Spannelement 1 überdecken, mit Ausnahme des inneren Bereichs des Scheibe 2 mit der Innenfläche 4. Figur 1 und Figur 2 zusammen können auch als eine Explosionsdarstellung von Spannelement 1 und Befestigungsteil 5 aufgefasst werden.

Das flanschartige Befestigungsteil 5 weist auch zwei weitere Aussparungen 8 auf. In einer der weiteren Aussparungen 8 ist ein Federelement 9, hier eine Platte 9 aus Federstahl dargestellt. Die Federelemente 9 überschneiden bereichsweise die erste Aussparung 7 zur Aufnahme des Spannelementes 1. Hiermit wird angedeutet, dass die Federelemente 9 radial auf das Spannelement 1 einwirken können und somit das Spannelement radial nach innen in Richtung auf die Aussenfläche des Kunststoffrohrformteiles eine Spannkraft ausübt. Die Federelemente 9 können auch als Blattfederpakete oder als schraubenförmig ausgebildete Federn in dazu geeigneten Aussparungen 8 im Befestigungsteil 5 angeordnet werden. Das Spannelement 1 in Figur 1 ist durch eine Kerbe 10 in zwei Segmenten 11a, 11b aufgeteilt. Zu jedem Segment 11a, 11b ist im Befestigungsteil 5 ein Federelement 9 vorgesehen. Wenn mehrere Federelemente 9 vorgesehen sind, kann auch das Spannelement 1 in mehreren Segmenten 11 aufgeteilt sein. Hiermit wird erreicht, dass die Spannkraft möglichst gleichmässig verteilt am Umfang des Kunststoffrohres aufgebracht werden kann.

In den Figuren 3, 4 und 5 sind Schnitte entlang der Linie AA von Figur 1 vergrössert dargestellt. Die Figuren 4 und 5 sind stärkere Vergrösserungen von einem Teilbereich aus der Figur 3. In Figur 3 ist gut ersichtlich, wie das Spannelement 1 im Schnitt einen T-förmigen Querschnitt aufweist. Der kürzere Balken des T stellt der Rand 3 dar und der längere Balken des T wird durch die ringförmige Scheibe 2, aufgeteilt in den Segmenten 11a, 11b gebildet.

In Figuren 4 und 5 ist der Teil des Spannelementes dargestellt, der während des Schweissens gegenüber der Aussenfläche des Kunststoffformteiles angeordnet ist. Die Innenfläche 4 des Spannelementes 1 weist in Figur 4 einen Vorsprung 12 und in Figur 5 zwei Vorsprünge 12 auf. Es sind auch Ausführungen mit mehreren Vorsprüngen 12 denkbar. Die Vorsprünge 12 sind jedoch immer parallel zueinander verlaufend angeordnet und in axialer Richtung der zu verschweissenden Kunststoffrohrformteile in einem gewissen Abstand hintereinander angeordnet. Durch diese axiale Anordnung von mehreren Vorsprüngen 12 hintereinander wird das Kunststoffrohr eingespannt und an der gewünschten Position in der Schweissvorrichtung gehalten. Die Vorsprünge 12 weisen eine Spannfläche 13, eine innere Seitenfläche 14 und eine äussere Seitenfläche 15 auf. Die Vorsprünge 12 weisen eine Höhe H von 0,1 bis 0,3 mm über der Innenfläche 4 des Spannelementes 1 auf.

In Figur 4 ist auch ersichtlich, wie der Vorsprung 12 eine Breite B aufweist, die weniger als 20% der Breite b der Scheibe 2 des Spannelementes 1 beträgt. Durch dieses Breitenverhältnis b/B wird bestimmt, wie gross der Flächendruck auf der Aussenfläche des Kunststoffrohrformteiles ist. Die Spannfläche 13 verläuft in einem rechten Winkel zu den Seitenflächen 14,15 und der Übergang von Seitenflachen 14, 15 zur Spannfläche 13 ist scharfkantig, das heisst ohne Rundung oder Fasung, ausgeführt. Die Spannfläche 13 verläuft parallel zur Innenfläche 4 oder im Falle eines rohrförmigen Kunststoffformteiles koaxial mit der Achse des Formteiles und koaxial mit der Innenfläche 4 des Spannelementes 1. Durch diese Anordnung wird sichergestellt, dass das Spannelement 1 höchstens um die Höhe H des Vorsprungs 12, die vorzugsweise 0,1 bis 0,3 mm beträgt, in die Aussenfläche des Kunststoffteiles eingedruckt wird. Dadurch wird erreicht, dass die miteinander zu verschweissenden Kunststoffteile bei dem notwendigen hohen Anpressdruck nicht unzulässig verformt werden. Für die Festigkeit des Kunststoffteiles ist ein Eindruck von wenigen Zehntel mm zulässig. Der Eindruck, der in der Aussenfläche des Kunststoffteiles nach dem Entfernen des Spannelementes 1 und nach dem Schweissvorgang zurückbleibt, wird weniger tief sein als die Höhe H des Vorsprunges 12.

Durch das T-förmige Profil des Spannelementes 1, zusammen mit dem Breitenverhältnis b/B wird die Aufbringung eines ausreichend hohen Flächendruckes möglich. Weil die Vorsprünge 12 der Spannelemente 1 verhältnismässig schmal sind, können die Kunststoffrohrformteile sehr nahe beim Rohrende und sehr nah bei der Schweissstelle eingespannt werden. Die Spannelemente 1 können beispielsweise auf einem Abstand von weniger als 25 mm auf beiden Seiten der Schweissstelle angeordnet werden. Hierdurch wird es möglich auch sehr kurze Rohrstücke einzuspannen und miteinander zu verschweissen. Somit können auch bei sehr engen Platzverhältnissen Rohrleitungen mit Verzweigungen oder Armaturen eingebaut und verschweisst werden. Das Spannelement 1 kann sowohl für verhältnismässig weiche als auch für verhältnismässig spröde Kunststoffe verwendet werden.

## Patentansprüche

1. Spannelement (1) zum Einspannen von Kunststoffformteilen während des Schweissens, umfassend ein flanschartiges Befestigungsteil (5) zur Befestigung an einer Kunststoffschweissvorrichtung, wobei das Spannelement (1) auf einer Innenfläche (4), die der Aussenfläche des Kunststoffformteils gegenüberliegend angeordnet ist, mindestens einen Vorsprung (12) aufweist, und wobei das Befestigungsteil (5) mindestens eine erste ringförmige Aussparung (7) zur Aufnahme des Spannelementes (1) aufweist, **dadurch gekennzeichnet, dass** das Befestigungsteil (5) mindestens eine zweite Aussparung (8) zur Aufnahme von radial auf das Spannelement (1) einwirkenden Federelementen (9) aufweist.

2. Spannelement zum Einspannen von Kunststoffformteilen nach dem Anspruch 1, **dadurch gekennzeichnet, dass** die Innenfläche (4) des ringförmigen Spannelementes (1) sich koaxial mit dem Kunststoffformteil erstreckt und segmental angeordnet ist, derart, dass der Vorsprung (12) das Kunststoffformteil während dem Schweissvorgang mit gleichmässig verteilter Spannkraft umschliesst.

3. Spannelement zum Einspannen von Kunststoffformteilen nach einem der Ansprüche 1 oder 2, **dadurch gekennzeichnet, dass** der Vorsprung (12) Seitenflächen (14,15) und eine Spannfläche (13) aufweist, wobei die Spannfläche konzentrisch verlaufend zur sich axial erstreckenden Innenfläche (4) angeordnet ist.

4. Spannelement zum Einspannen von Kunststoffformteilen nach einem der Ansprüche 1 bis 3, **dadurch gekennzeichnet, dass** die Vorsprünge (12) parallel zueinander verlaufend angeordnet sind.

5. Spannelement zum Einspannen von Kunststoffformteilen nach einem der Ansprüche 1 bis 4, **dadurch gekennzeichnet, dass** die Vorsprünge (12) in axialer Richtung der zu verschweissenden Kunststoffteile beabstandet hintereinander angeordnet sind.

6. Spannelement zum Einspannen von Kunststoffformteilen nach einem der Ansprüche 1 bis 5, **dadurch gekennzeichnet, dass** die Vorsprünge (12) eine Höhe H von 0,1 bis 0,3 mm über der Innenfläche (4) des Spannelementes (1) aufweisen.

7. Spannelement zum Einspannen von Kunststoffformteilen nach einem der Ansprüche 1 bis 6, **dadurch gekennzeichnet, dass** die Spannfläche (13) des Vorsprungs (12) eine Breite B von weniger als 20 % der Breite b der Innenfläche (4) des Spannelementes (1) aufweist.

8. Spannelement zum Einspannen von Kunststoffformteilen nach einem der Ansprüche 1 bis 7, **dadurch gekennzeichnet, dass** die Spannfläche (13) rechtwinklig zu den Seitenflächen (14,15) und scharfkantig angrenzend an den Seitenflächen des Vorsprungs (12) angeordnet sind.

9. Spannelement zum Einspannen von Kunststoffformteilen nach einem der Ansprüche 1 bis 8, **dadurch gekennzeichnet, dass** in der Kunststoffschweissvorrichtung zu jedem der miteinander zu verschweissenden Kunststoffteile jeweils zwei Befestigungsteile (5) und zwei Spannelemente (1) als halbkreisförmigen und zueinander passenden Werkstücke auf gegenüberliegenden Seiten der Schweissstelle angeordnet sind.

10. Spannelement zum Einspannen von Kunststoffformteilen nach einem der Ansprüche 1 bis 9, **dadurch gekennzeichnet, dass** die Spannelemente (1) in einem Abstand von weniger als 25 mm von der Schweissstelle der zu verschweissenden Kunststoffformteile angeordnet sind.

11. Spannelement zum Einspannen von Kunststoffformteilen nach einem der Ansprüche 1 bis 10, **dadurch gekennzeichnet, dass** die Kunststoffformteile Kunststoffrohrformteile sind.

## Claims

1. Clamping element (1) for fixing plastic moulded parts during welding, comprising a flange-like fastening part (5) for fastening on a plastics welding device, the clamping element (1) having at least one projection (12) on an inner surface (4) which is arranged opposite the outer surface of the plastic moulded part and the fastening part (5) having at least one first annular recess (7) for receiving the clamping element (1), **characterized in that** the fastening part (5) has at least one second recess (8) for receiving spring elements (9) acting radially on the clamping element (1).

2. Clamping element for fixing plastic moulded parts according to Claim 1, **characterized in that** the inner surface (4) of the annular clamping element (1) extends coaxially with the plastic moulded part and is arranged in a segmental manner, in such a way that the projection (12) encloses the plastic moulded part with a uniformly distributed clamping force during the welding operation.

3. Clamping element for fixing plastic moulded parts according to either of Claims 1 and 2, **characterized in that** the projection (12) has side surfaces (14, 15) and a clamping surface (13), the clamping surface being arranged in such a manner that it extends concentrically with respect to the axially extending inner surface (4).

4. Clamping element for fixing plastic moulded parts according to one of Claims 1 to 3, **characterized in that** the projections (12) are arranged such that they extend parallel to one another.

5. Clamping element for fixing plastic moulded parts according to one of Claims 1 to 4, **characterized in that** the projections (12) are arranged such that they are spaced one behind the other in the axial direction of the plastic parts to be welded.

6. Clamping element for fixing plastic moulded parts according to one of Claims 1 to 5, **characterized in that** the projections (12) have a height H of 0.1 to 0.3 mm above the inner surface (4) of the clamping element (1).

7. Clamping element for fixing plastic moulded parts according to one of Claims 1 to 6, **characterized in that** the clamping surface (13) of the projection (12) has a width B of less than 20% of the width b of the inner surface (4) of the clamping element (1).

8. Clamping element for fixing plastic moulded parts according to one of Claims 1 to 7, **characterized in that** the clamping surface (13) is arranged at right angles with respect to the side surfaces (14, 15) and adjoining the side surfaces of the projection (12) with sharp edges.

9. Clamping element for fixing plastic moulded parts according to one of Claims 1 to 8, **characterized in**
**that** two hastening parts (5) and two clamping elements (1) are respectively arranged in the plastics welding device for each of the plastic parts to be welded to one another on opposite sides of the welding point as semicircular workpieces matching one another.

10. Clamping element for fixing plastic moulded parts according to one of Claims 1 to 9, **characterized in that** the clamping elements (1) are arranged at a distance of less than 25 mm from the welding point of the plastic moulded parts to be welded.

11. Clamping element for fixing plastic moulded parts according to one of Claims 1 to 10, **characterized in that** the plastic moulded parts are plastic moulded pipe parts.

## Revendications

1. Elément de serrage (1) pour serrer des pièces moulées en plastique pendant le soudage, comprenant une partie de fixation (5) en forme de bride pour la fixation à un dispositif de soudage de plastique, l'élément de serrage (1) présentant au moins une saillie (12) sur une face intérieure (4) qui est disposée en face de la face extérieure de la pièce moulée en plastique, et la partie de fixation (5) présentant au moins un premier évidement de forme annulaire (7) pour recevoir l'élément de serrage (1), **caractérisé en ce que** la partie de fixation (5) présente au moins un deuxième évidement (8) pour recevoir des éléments de ressort (9) agissant radialement sur l'élément de serrage (1).

2. Elément de serrage pour serrer des pièces moulées en plastique selon la revendication 1, **caractérisé en ce que** la face intérieure (4) de l'élément de serrage (1) de forme annulaire s'étend coaxialement à la pièce moulée en plastique et est disposée sous forme segmentée, de telle sorte que la saillie (12) entoure la pièce moulée en plastique pendant l'opération de soudage avec une force de serrage répartie uniformément.

3. Elément de serrage pour serrer des pièces moulées en plastique selon l'une quelconque des revendications 1 ou 2, **caractérisé en ce que** la saillie (12) présente des faces latérales (14, 15) et une face de serrage (13), la face de serrage étant disposée concentriquement par rapport à la face intérieure (4) s'étendant axialement.

4. Elément de serrage pour serrer des pièces moulées en plastique selon l'une quelconque des revendications 1 à 3, **caractérisé en ce que** les saillies (12) sont disposées parallèlement les unes aux autres.

5. Elément de serrage pour serrer des pièces moulées en plastique selon l'une quelconque des revendications 1 à 4, **caractérisé en ce que** les saillies (12) sont disposées de manière espacées les unes derrière les autres dans la direction axiale des pièces en plastique à souder.

6. Elément de serrage pour serrer des pièces moulées en plastique selon l'une quelconque des revendications 1 à 5, **caractérisé en ce que** les saillies (12) présentent une hauteur H de 0,1 à 0,3 mm sur la face intérieure (4) de l'élément de serrage (1).

7. Elément de serrage pour serrer des pièces moulées en plastique selon l'une quelconque des revendications 1 à 6, **caractérisé en ce que** la face de serrage (13) de la saillie (12) présente une largeur B inférieure à 20% de la largeur b de la face intérieure (4) de l'élément de serrage (1).

8. Elément de serrage pour serrer des pièces moulées en plastique selon l'une quelconque des revendications 1 à 7, **caractérisé en ce que** la face de serrage (13) est disposée à angle droit par rapport aux faces latérales (14, 15) et avec des arêtes vives adjacentes aux faces latérales de la saillie (12).

9. Elément de serrage pour serrer des pièces moulées en plastique selon l'une quelconque des revendications 1 à 8, **caractérisé en ce que** l'on dispose dans le dispositif de soudage de plastique, pour chacune des pièces en plastique à souder les unes aux autres, à chaque fois deux parties de fixation (5) et deux éléments de serrage (1) sous forme de pièces de forme semi-circulaire et adaptées les unes aux autres, sur des côtés opposés des points de soudure.

10. Elément de serrage pour serrer des pièces moulées en plastique selon l'une quelconque des revendications 1 à 9, **caractérisé en ce que** les éléments de serrage (1) sont disposés à une distance inférieure à 25 mm du point de soudure des pièces moulées en plastique à souder.

11. Elément de serrage pour serrer des pièces moulées en plastique selon l'une quelconque des revendications 1 à 10, **caractérisé en ce que** les pièces moulées en plastique sont des pièces moulées tubulaires en plastique.
